Europäisches Patentamt

European Patent Office

Office européen des brevets

(19)

(11) **EP 0 749 216 A1**

(12) **EUROPEAN PATENT APPLICATION**

(43) Date of publication:
**18.12.1996 Bulletin 1996/51**

(51) Int. Cl.$^6$: **H04B 7/08**

(21) Application number: **96109435.6**

(22) Date of filing: **12.06.1996**

(84) Designated Contracting States:
**AT BE DE DK ES FI FR GB GR IE IT LU NL PT SE**

(30) Priority: **14.06.1995 IT TO950495**

(71) Applicant: **SIP SOCIETA ITALIANA PER l'ESERCIZIO DELLE TELECOMUNICAZIONI P.A.
10122 Torino (IT)**

(72) Inventor: **Ansbro, Andrew Peter
Torino (IT)**

(74) Representative: **Riederer Freiherr von Paar zu Schönau, Anton et al
Lederer, Keller & Riederer,
Postfach 26 64
84010 Landshut (DE)**

(54) **Antenna operating in diversity, in particular for micro-cell mobile communication systems, and communication method using the antenna**

(57) The antenna (1) combines the position-diversity and angle-diversity operation criteria. Thanks to such combination, the antenna gain (G) has maxima already when the distance (d) between the antenna elements (5) is comparable with the operation wavelength (λ) or with a fraction of that wavelength. The preferred application concerns micro-cell or pico-cell mobile radio communications systems operating in urban environment.

fig. 1

**Description**

The present invention relates to antennas operating in diversity.

The invention was developed by paying particular attention to its possible use in personal communication systems or micro-cell (or pico-cell) mobile radio systems intended to operate in an urban environment, such as the systems known as DECT (Digital European Cordless Telecommunication) and in particular the system known as DCS (Digital Communication System) 1800. For a general description of these systems and of the problems associated with their use, reference can be made to the papers "Practical Considerations of Using Antenna Diversity in DECT" by P.E. Mogensen and S. Petersen, presented at the 1994 IEEE 44th Vehicular Technology Conference, Stockholm, 8-10 June 1994 and published on pages 1532-1536 of Volume 3 of the Proceedings of the conference, or "DCT 1800, una solución DECT para aplicaciones de acceso por radio", by G.M. Campbell and P. Hannema, Ericsson Review, No. 2, 1994, pages 84-92.

In any case, it should be stated that the present invention applies in general to antennas operating in diversity, regardless of the specific application considered above.

In micro-cell or pico-cell systems like those mentioned above, it is desirable to keep the antenna size as small as possible, in order to avoid excessively bulky structures. This also applies to base stations, for which wall mounted antennas are frequently used to cover a certain cell area. When using that solution, situations in which the main dimension of the cell is not parallel to the antenna boresight are quite common. This occurs, for instance, in the case of a wall mounted dipole antenna used to ensure coverage of a road section or of a tunnel. In this case the possibility of steering the antenna beam so as to align it as closely as possible to the main dimension of the cell seems interesting.

It is also well known that such systems are particularly prone to fading phenomena mainly due to multiple propagation paths. Antenna diversity has been conventionally adopted in telecommunications to obviate the fading phenomena (see the aforementioned document by Mogensen and Petersen).

Currently, one of the most widely used solutions entails the use of antennas operating with spatial (or position) diversity: in practice, the antenna comprises two or more elements, usually identical, each of which operates as an antenna, for instance a dipole antenna. In use, the element which at that movement provides the best performance in terms of received field intensity or power, Bit Error Rate, etc. is selected as active element. It is well known that diversity systems operating on the basis of that criterion are the more efficient the more widely spaced the individual elements: indeed, it is clear that, the longer the distance between the elements, the lower the probability that the various elements of the antenna may be influenced negatively and to the same extent by fading. Clearly, this requirement for spatial diversity is at odds with the desire to limit the overall size of the antenna.

Another diversity technique is the one which may be defined as "angle" diversity. In this case, the elements of the antenna system differ in their polar characteristics (typically, their radiation diagrams), so that, when the disturbance is at its highest intensity in the main lobe or lobes of one of the elements of the antenna, the other element or elements are able to assure a better performance level.

The present invention aims to provide an antenna operating with diversity techniques which is capable of improving radio coverage, in particular but not only in micro-cell and pico-cell mobile radio systems, while limiting significantly the size of the antenna and of the system associated with it.

According to the present invention, this goal is attained thanks to an antenna and to the related radio communication method that have the characteristics described specifically in the claims which follow.

Essentially, the antenna according to the invention is based on an association of spatial and angle (or phase) diversity, since it has been discovered that, through this combination and as a function of the distance between the radiating elements, it is possible to attain an appreciable diversity gain while maintaining the radiating elements very close to each other (at distances comparable with the operating wavelength or with fractions of that wavelength); therefore the antenna and the associated system are not penalised in terms of overall size.

In one possible embodiment, an antenna according to the invention simply comprises two identical radiating elements placed over a ground plane, and a microstrip circuit, of the type khown as 90° hybrid, which connects in quadrature the input ports of the two antenna elements and allows an increase in both the absolute gain and the diversity gain.

As will be seen more clearly further on, this embodiment can also be extended and generalised to a structure comprising any number of radiating elements, for example in an array.

From this point of view, it can be observed that in purely structural terms - the solution according to the invention can be assimilated to the antenna structure currently known as "phased array". In this regard it should be noted that the reference to a 90° phase shift, or to a quadrature connection of the antenna elements, is not mandatory, since the choice of a different phase shift results only into a different spatial orientation of the overall radiation diagram of the antenna.

For a full appreciation of the invention, it is to be observed that, in order to obtain a significant improvement over a single antenna when operating with diversity techniques, conventionally it has been deemed necessary to space apart the antennas by a distance corresponding to a certain number of wavelengths, usually at least five wavelengths.

The solution according to the invention instead goes in the opposite direction, by optimising the distance between the radiating elements and thus defining a range of optimal distances which maximise diversity (and absolute) gain for cells of different shapes, while keeping the distance(s) between the various elements at a minimum.

The invention shall now be described, purely by way of non limiting example, with reference to the enclosed drawings, in which:

- Figures 1 and 2 are two perspective views of an antenna according to the invention, as seen from two substantially opposite points of view,
- Figure 3 is a schematic representation of the electrical structure of an antenna like the one depicted in Figures 1 and 2,
- Figure 4 shows a typical application of an antenna according to the invention, and
- Figure 5 is a diagram illustrating the operation and the advantages of the invention in terms of gain, for the application shown in Figure 4.

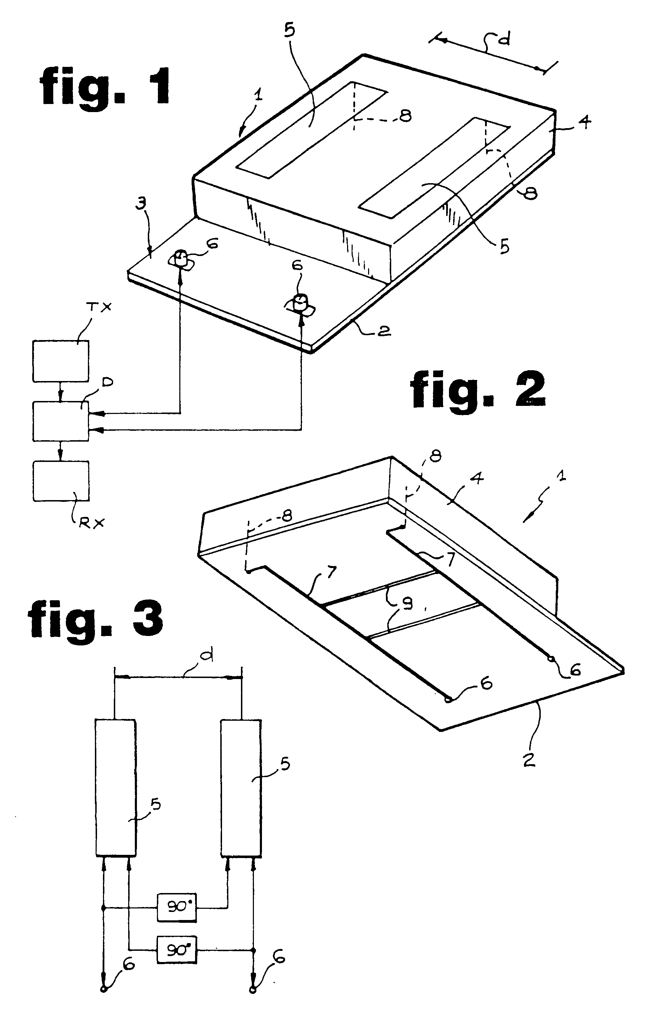

In the drawings, reference 1 generally indicates an antenna comprising, according to a known solution, a base plate 2 made of dielectric material such as Teflon, of which one side (the upper one in Figure 1) is coated with an electrically conductive material such as copper.

Base plate 2, which has an overall rectangular shape, bears a parallelepiped shaped element 4 on a portion of one of its surfaces (in the example shown, the upper face in Figure 1). Element 4 also is made of dielectric material such as fibreglass foam. The face of element 4 opposite to base plate 2 bears two strips 5 made of electrically conductive material such as copper, forming two antenna elements spaced apart by a distance d (referred to the longitudinal axes of the two strips).

Reference 6 indicates two connecting terminals (in the example shown, two bushings for connection to a coaxial cable) located on the face of plate 2 bearing element 4 and connected, on the opposite face (better visible in Figure 2) to two microstrip lines 7 made of electrically conductive material. Each of these lines is made according to the current techniques for the manufacture of hybrid circuits and is in turn connected to one of the strips 5, forming the antenna elements, through a conductor 8 that passes through dielectric element 4 (and therefore is depicted with dashed lines both in Figure 1 and in Figure 2).

On the lower face of plate 2, the two microstrip lines 7 are connected to two crossing elements 9, so as to bring about the general antenna structure shown schematically in Figure 3, in which the two strips 5 constitute two identical radiating elements which are placed over a ground plane, are parallel to each other and are spaced apart by a distance d, whilst the set of microstrip connections 7, 8, 9 forms a so-called 90° hybrid which connects the two terminals or input ports 6 to either antenna or antenna element in quadrature, thus respectively through a direct connection and through a cross connection to which a 90° phase shift is associated.

As has already been stated in the introduction of the specification, construction techniques for antennas of the type specified above are well known and therefore they do not to require a detailed description here, also because they are not of relevance for understanding and implementing the invention.

Antenna 1 is associated with a radio communication unit carrying out, through antenna 1 itself, the function of transmitting and/or receiving radio signals at a given wavelength λ. In the example depicted, which is the most common one, the radio communication unit to which antenna 1 is associated comprises a transmitter TX and a receiver RX (both of a known type) coupled (also in known way) to antenna 1 through a diversity circuit (switch) D.

The function of circuit D is essentially to ensure that, during operation, the active element used at a given moment for reception and/or transmission is the one among the antenna elements 5 which, at that moment, meets a pre-set diversity operation criterion, aimed at optimising the performance of the system as a whole.

For example, a commonly used criterion is to measure the intensity or power of the useful signal received at a given moment by the various antenna elements and to use for reception (or transmission) the element that at that moment receives the highest useful signal intensity or power. It is of course possible to adopt different criteria, for example, to measure the Bit Error Rate (BER) associated with the signals received by the various antenna elements and using the element that at the moment provides the best BER.

Whatever the operating criterion adopted, this criterion identifies, in an antenna like antenna 1 of Figures 1 through 3, a given relationship between the antenna gain and distance d between the antenna elements 5. An example of this relationship is shown in Figure 5, which will be explained further on.

It should in any case be stated that, for the purpose of implementing the invention, generally the specific choice of the diversity criterion (i.e. of the criterion for the selection of the antenna element to be used at a given moment: largest amplitude or power, lowest BER, etc.) is not critical. From this point of view it can therefore be affirmed that the solution according to the invention (i.e. the combination of position or spatial diversity and of angle diversity, with a specific choice of the distance value) is essentially "transparent" to the diversity criterion adopted.

If the signal feeding means (this term denoting the whole of elements 6, 7, 8, 9 as specified better below) placed between the antenna elements 5 and the radio communication unit RX, TX, D define phase-shifted signal paths (for example by 90°), the relationship between antenna gain and the distance d separating the various elements 5 exhibits at least one maximum gain value for values of distance d comparable to wavelength λ used or to fractions of that wavelength. This clearly departs from the current knowledge, according to which the absolute or diversity gain of a position diversity antenna becomes appreciable only for distances d equal to a rather high multiple (five times or more) of wavelength λ used.

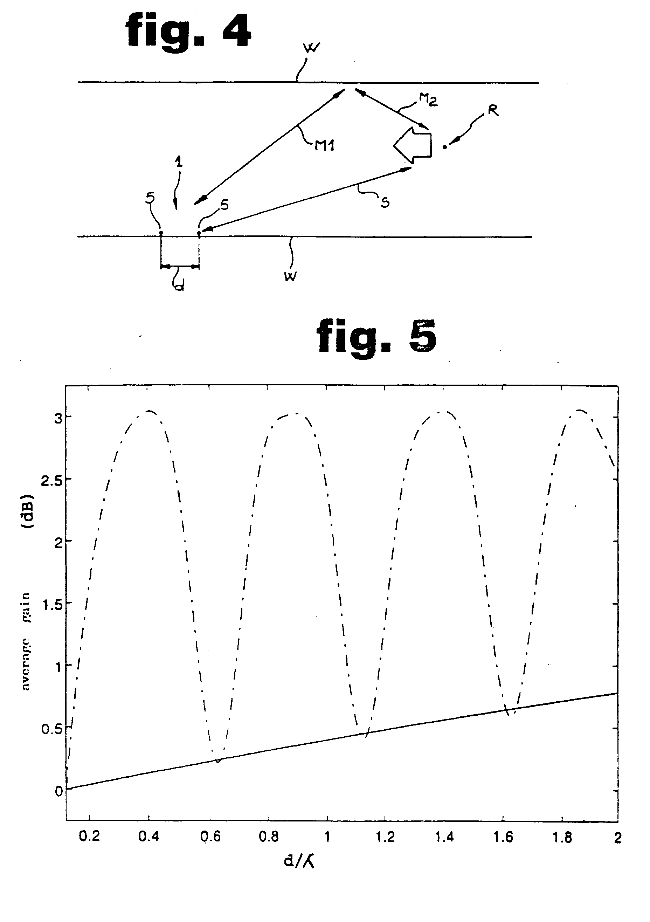

This tact was verified by the applicant, for example with reference to the utilisation situation, typical of micro-cell or pico-cell systems, shown schematically in Figure 4.

In this Figure an antenna 1 like the one shown in Figures 1 through 3 is mounted with radiating elements 5 oriented vertically on one of the walls W bordering a passageway such as a road. The average antenna gain has been determined in the transmission towards a mobile receiver R moving along the road, in a typical multipath fading situation. Multiple paths are exemplified in Figure 4 by a direct path S and a reflected path comprising two sections M1, M2 respectively before and after reflection on wall W opposite to the one on which the antenna is mounted. The diversity criterion adopted was that of maximum received power. Wavelength λ was about 16 cm and phase shift angle φ determined by microstrip lines 7, 8 and 9 was 90°, so that the direction of maximum sensitivity of the antenna was oriented along the road travelled by receiver R.

The results obtained are shown in the diagram in Figure 5, where ratio d/λ between distance d separating elements 5 of antenna 1 and wavelength λ is plotted on the x-axis.

In the diagram:

- the solid line curve shows the trend of diversity gain G attainable, as distance d (d/λ ratio) varies, by using two antennas operating with position diversity, instead of a single isolated antenna, and
- the dashed and dotted line curve shows the diversity gain attainable, again as a function of distance d (d/λ ratio), with an antenna according to the invention.

In both cases, the diversity gain (in dB) refers to the average power received by receiver R in a path along the road defined by walls W.

The solid line curve (in practice, a straight line with constant slope) represents a confirmation of the current knowledge in the field of spatial diversity and shows that the gain attainable by operating in diversity has an appreciable values only for values of distance d equal to several wavelengths (for instance, five). In particular, it should be noted that for distances d up to twice the wavelength λ, the traditional diversity gain remains at very low levels (0 to about 0.75 dB).

On the contrary, with the solution according to the invention the gain curve exhibits, within the range shown (0 ≦ d/λ ≦ 2), a markedly oscillatory trend, to some extent similar to an overshooting characteristic. Otherwise stated, the curve is rather similar to a sinusoid of slowly decreasing amplitude centred on a slowly growing average value, so as to exhibit maxima of the order of about 3 dB and minima essentially positioned on the solid line curve of the conventional diversity diagram. Thanks to the much higher gain with respect to a traditional antenna, it is thus possible to cover an area of interest with a much lower number of antennas, thus obtaining remarkable savings on construction, installation and maintenance costs.

In particular, with a distance d of about 0.4 λ it is already possible to attain a gain essentially equal to 3 dB, such as the one attainable, when operating traditionally, only with distances larger by at least one order of magnitude.

With reference to the application of the structure depicted in Figures 1 and 2 to a DECT system (λ = 16 cm), the first maximum of the dashed and dotted line diagram is obtained for an abscissa value d/λ = 0.4 which, in terms of distance d between elements 5, would correspond to about 6.5 cm. In practice however that value (first maximum of the diagram) is often unusable due to the coupling between the antenna elements 5. For that reason, values of d corresponding to the second or possibly the third maximum of the diagram, i.e. values of d corresponding to d/λ = 0.9 (d = about 14.4 cm) or d/λ=1.4 (d = about 22.4cm) respectively, are usually chosen. As can be clearly seen, such values of distance d are slightly lower or slightly higher than, but comparable with the value of wavelength λ. Usually, the choice of the fourth maximum (d/λ about 1.8) is too penalising in terms of size. In a practical embodiment of the antenna shown in Figures 1 and 2, intended to operate as a wall mounted antenna for a DECT system, the two antenna elements 5 had a thickness of a few microns, a width of about 25 mm and a length of about 80 mm. The second maximum of the gain was exploited and thus the size of base plate 2 was of the order of 20 x 20 cm. The advantages of the invention in terms of size are thus readily apparent.

As previously stated, with the terminology adopted in the claims which follow, the choice of values of distance d corresponding to one of the first maxima of the dashed and dotted line curve in Figure 5 can be defined as the choice of a value of distance "comparable" with communication wavelength λ or a fraction thereof.

For the sake of clarity, it should be specified that in the present description and in the claims, reference was made to connectors 6 and microstrip elements 7, 8 and 9 as "signal feeding means". It is wholly evident that this term refers both to transferring the radio frequency signals applied to connectors 6 towards radiating elements 5 (when the antenna operates in transmission), and to transferring the radio frequency signals detected by radiating elements 5 towards connectors 6 (when the antenna operates in reception).

Again, it is evident that the function of generating signal paths which are phase shifted with respect to each other, accomplished here by means of microstrip elements 7, 8 and 9 could be performed, in a well known manner, with different solutions, for example by using phase shifters associated with radio communication unit TX, RX, D, rather than with radiating elements 5, as in the exemplary embodiment shown here.

Of course, whilst the principle of the invention remains valid, the construction details and embodiments can be varied widely with respect to what has been described and illustrated, without departing from the scope of the present invention.

## Claims

1. Antenna operating with diversity techniques for radio communication units arranged to perform at least one of the functions of transmission (TX) and reception (RX) of radio signals at a given wavelength ($\lambda$), said antenna (1) comprising at least a first and a second antenna element (5) placed at a given distance (d) and associated with radio signal feeding means (6, 7, 8, 9) interposed, in use, between said at least a first and a second antenna element (5) and said radio communication unit (TX, RX), wherein, in use, one of said at least a first and a second antenna element (5) is utilised selectively as an active element according to a predetermined criterion of diversity operation, said criterion identifying a given relationship between the diversity gain of the antenna (G) and said distance (d), <u>characterised in that</u> said radio signal feeding means (6, 7, 8, 9) define, for said at least a first and a second antenna element (5), respective signal paths phase shifted with respect to each other by a given phase angle ($\phi$), such that said given relationship exhibits at least one maximum of the value of said diversity gain for at least one respective value of said distance (d) comparable to said wavelength ($\lambda$) or to a fraction thereof; and said at least a first and a second antenna elements (5) are placed at a distance (d) essentially equal to said at least one respective value.

2. Antenna as per claim 1, characterised in that said given relationship exhibits a plurality of maxima of the value of said diversity gain for a respective plurality of values of said distance (d) in increasing order and in that said at least a first and a second antenna element (5) are placed at a given distance essentially corresponding to the second or to the third of said maxima of the diversity gain value.

3. Antenna as per claim 1 or as per claim 2, characterised in that said signal feeding means (6, 7, 8, 9) define respective signal paths phase shifted with respect to each other by a given phase angle ($\phi$) essentially equal to 90°.

4. Antenna as per any of the previous claims, characterised in that said at least a first and a second antenna element (5) are elongated elements arranged side by side at said given distance (d).

5. Antenna as per claim 4, characterised in that said elongated elements (5) have essentially identical lengths.

6. Antenna as per claim 4 or claim 5, characterised in that said at least a first and a second antenna element (5) are in the form of strips of conductive materials.

7. Antenna as per any of the previous claims, characterised in that said radio signal feeding means comprise microstrip elements (7, 8, 9).

8. Antenna as per any of the previous claims, characterised in that said at least a first and a second antenna element (5) are located over a ground plane (3) made of electrically conductive material.

9. Antenna as per claim 8, characterised in that a separation layer (4) made of dielectric material is interposed between said at least a first and a second antenna elements (5) and said ground plane (3).

10. Radio communication method for performing at least one among the functions of radio signal transmission (TX) and reception (RX) by feeding radio signals at a given wavelength ($\lambda$) respectively towards and from an antenna (1) comprising at least a first and a second antenna element (5) arranged at a given distance (d), said method selectively utilising one of said at least a first and a second antenna element (5) as an active element according to a predetermined diversity operation criterion which identifies a given relationship between the diversity gain of the antenna (G) and said distance (d), <u>characterised in that</u> the feeding of said radio signals with respect to said at least a first and a second antenna element (5) is accomplished with signal paths phase shifted with respect to each other by a given phase angle ($\phi$), so that said given relationship exhibits at least one maximum of the value of said diversity gain for at least one respective value of said distance (d) comparable to said wavelength ($\lambda$) or to a fraction thereof, and in that said at least a first and a second antenna element (5) are set at a distance (d) essentially equal to said at least one respective value.

11. Method as per claim 10, characterised in that said given relationship exhibits a plurality of maxima of said diversity gain for a respective plurality of values of said distance (d), in increasing order, and in that said at least a first and a second antenna elements (5) are set at a given distance essentially corresponding to the second or the third of said maxima of said diversity gain.

12. Method as per claim 10 or claim 11, characterised in that said signal paths (6, 7, 8, 9) are phase shifted with respect to each other by a phase angle ($\phi$) essentially equal to 90°.

**fig. 1**

**fig. 2**

**fig. 3**

# fig. 4

# fig. 5

European Patent
Office

**EUROPEAN SEARCH REPORT**

Application Number

EP 96 10 9435

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-3 568 197 (CUBLEY)<br>* claim 1; figure 1 *<br>--- | 1 | H04B7/08 |
| A | EP-A-0 108 816 (INTERNATIONAL STANDARD ELECTRIC CORP.)<br>* figures 4,5 *<br>* page 4, line 14 - line 20 *<br>--- | 1,4,10, 12 | |
| A | EP-A-0 023 948 (LICENTIA PATENT-VERWALTUNGS-GMBH.)<br>* figure 1 *<br>* page 4, line 6 - line 23 *<br>--- | 1 | |
| A | US-A-4 512 034 (GREENSTEIN ET AL.)<br>* the whole document *<br>----- | | |

TECHNICAL FIELDS
SEARCHED      (Int.Cl.6)

H04B
H01Q

The present search report has been drawn up for all claims

| Place of search | Date of completion of the search | Examiner |
|---|---|---|
| BERLIN | 19 August 1996 | Danielidis, S |

EPO FORM 1503 03.82 (P04C01)